# EUROPEAN PATENT APPLICATION

(11) **EP 4 697 667 A2**
(43) Date of publication of application: **18.02.2026**
(21) Application number: 25217170.7
(22) Date of filing: 27.03.2023
(51) Int. Cl.: H04L 41/0853

(54) **METHODS AND APPARATUSES FOR PERSONAL INTERNET OF THINGS NETWORK (PIN) MANAGEMENT**

(30) Priority: 28.03.2022 US 202263324517 P
(62) Divisional of application: 23719533.4
(71) Applicant: InterDigital Patent Holdings, Inc., Wilmington, DE 19809 (US)
(72) Inventor: ABBAS, Taimoor, Sainte-Julie, J3E 3H2 (CA); PURKAYASTHA, Debashish, Conshohocken, 19428 (US); SETHI, Anuj, Montreal, H3A 3G4 (CA); SHI, Xiaoyan, Québec, H34 3G4 (CA); STARSINIC, Michael, Conshohocken, 19428 (US); AHMAD, Saad, Montreal, H3A 3G4 (CA)
(74) Representative: AWA Sweden AB

(57) **Abstract**

Methods and apparatuses are described herein for Personal Internet of Things Network (PIN) management. A first wireless transmit/receive unit (WTRU) may transmit, to a network node in a cellular network, a first non-access stratum (NAS) request indicating capability of the first WTRU as a PIN Element (PE) with Management Capability (PEMC) in a PIN. The WTRU may receive, from the network node, a first NAS response including authorization information, an authorized PIN type and validity duration of the PIN. The WTRU may receive, from a second WTRU, a connection request including PE information associated with the second WTRU. The PE information may include a PE type and a PE capability. The WTRU may transmit, to the second WTRU, based on the PE type and the PE capability being compatible with the authorized PIN type, a connection response indicating the second WTRU is authorized as a PE of the PIN.

## Description

### CROSS-REFERENCE TO RELATED APPLICATIONS

This application claims the benefit of U.S. Provisional Application No. 63/324,517, filed March 28, 2022, the contents of each are incorporated herein by reference.

### BACKGROUND

When multiple Internet of Things (loT) devices are deployed in a private environment, the devices with loT capabilities can be organized in a Personal loT Network (PIN). The PIN may comprise PIN elements (PEs) such as security sensor, smart light, smart plug, printer and cell phone. Different PEs may have different capabilities. For example, a PE with gateway capability (PEGC) may provide connection between PEs and between PEs and a cellular network. A PE with management capability (PEMC) may configure and/or manage a PIN. However, methods and apparatuses for creating, updating, authorizing/deauthorizing, activating/deactivating, and managing the PIN are not defined.

### SUMMARY

Methods and apparatuses are described herein for Personal Internet of Things Network (PIN) management. A first wireless transmit/receive unit (WTRU) may transmit, to a network node in a cellular network, a first non-access stratum (NAS) request message indicating capability of the first WTRU that acts as a PIN Element (PE) with Management Capability (PEMC) in a PIN. The WTRU may receive, from the network node in the cellular network, a first NAS response message that includes authorization information of the first WTRU that acts as the PEMC to initiate the PIN, an authorized PIN type and validity duration of the PIN. The WTRU may receive, from a second WTRU, a connection request message that includes PE information associated with the second WTRU. The PE information may include a PE type of the second WTRU and a PE capability of the second WTRU. The WTRU may transmit, to the second WTRU, based on that the PE type and the PE capability are compatible with the authorized PIN type, a connection response message indicating that the second WTRU is authorized to act as a PE of the PIN.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating an example home automation Personal Internet of Things Network (PIN);
FIG. 3 is a diagram illustrating an example wearable PIN;
FIG. 4 is a diagram illustrating an example network architecture for a PIN;
FIG. 5 is a diagram illustrating an example reference model of 5G/NextGen network;
FIG. 6 is a diagram illustrating an example PIN management;
FIG. 7A is a diagram illustrating an example WTRU-initiated PIN creation;
FIG. 7B is a continuation of FIG. 7A;
FIG. 8 is a diagram illustrating an example PIN management procedure;
FIG. 9 is a diagram illustrating an example WTRU-initiated PIN update;
FIG. 10 is a diagram illustrating an example WTUR-initiated PIN recreation;
FIG. 11 is a diagram illustrating example PIN activation/deactivation with validity timer;
FIG. 12 is a diagram illustrating an example network-initiated PIN creation; and

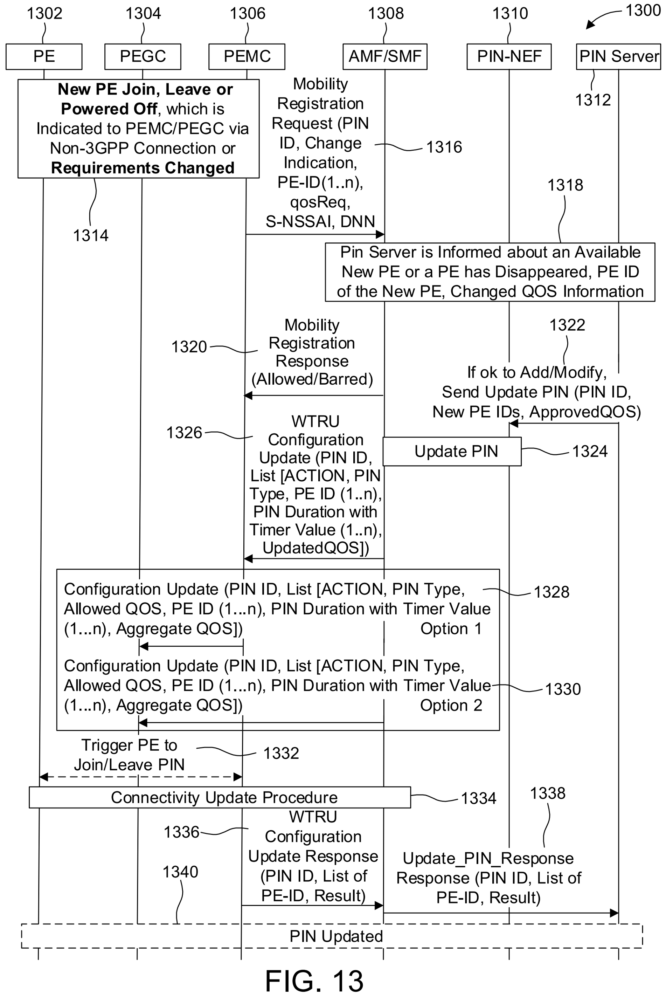

FIG. 13 is a diagram illustrating an example network-initiated PIN update.

### DETAILED DESCRIPTION

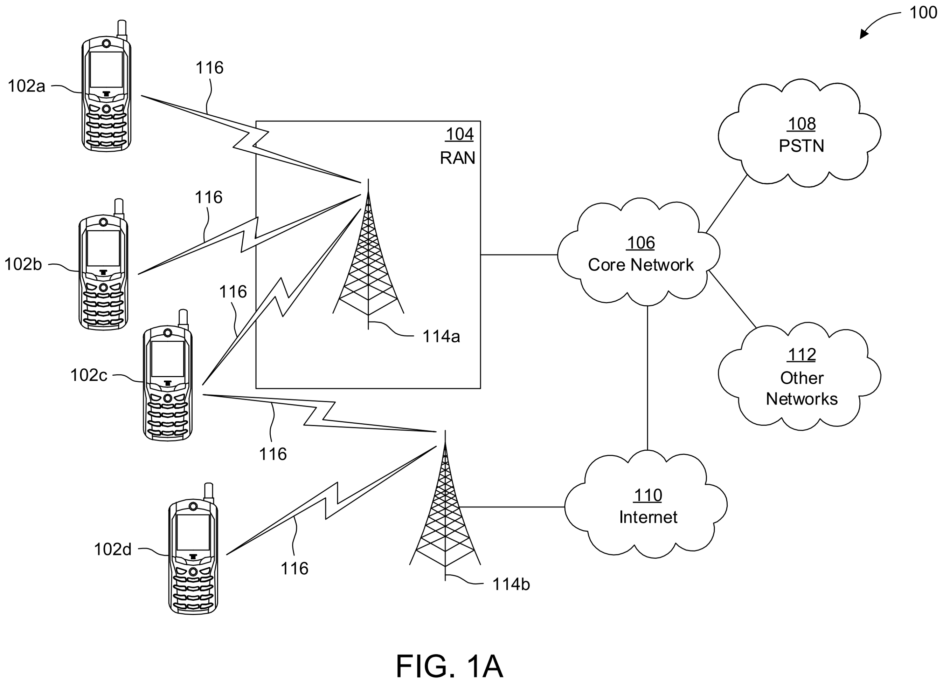

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a Personal Internet of Things Network (PIN) Element (PE) with Management Capability (PEMC), a PE with Gateway Capability (PEGC), PIN Element (PE), a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

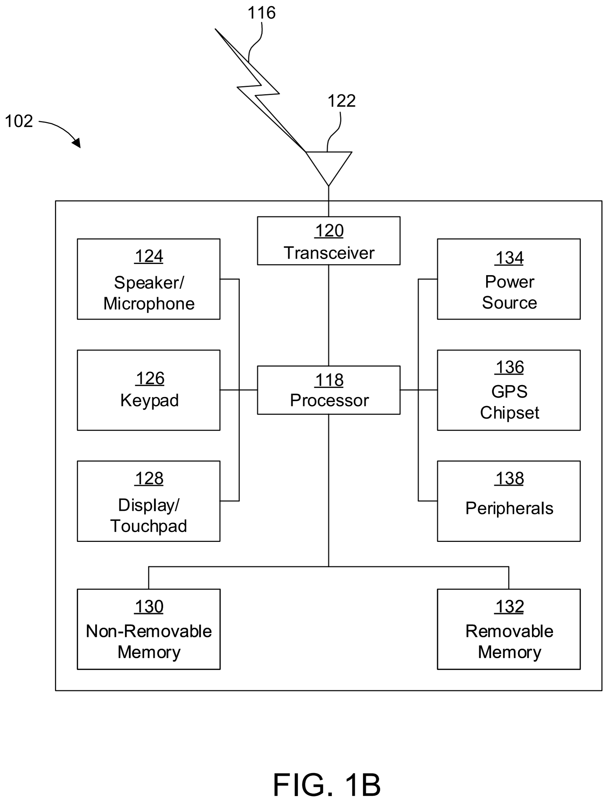

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

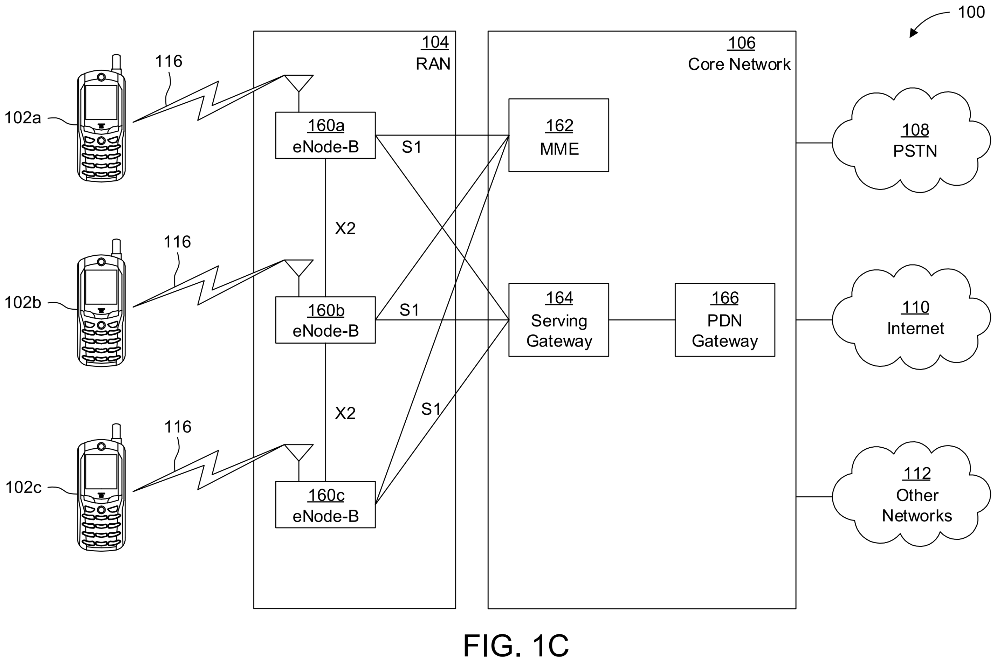

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

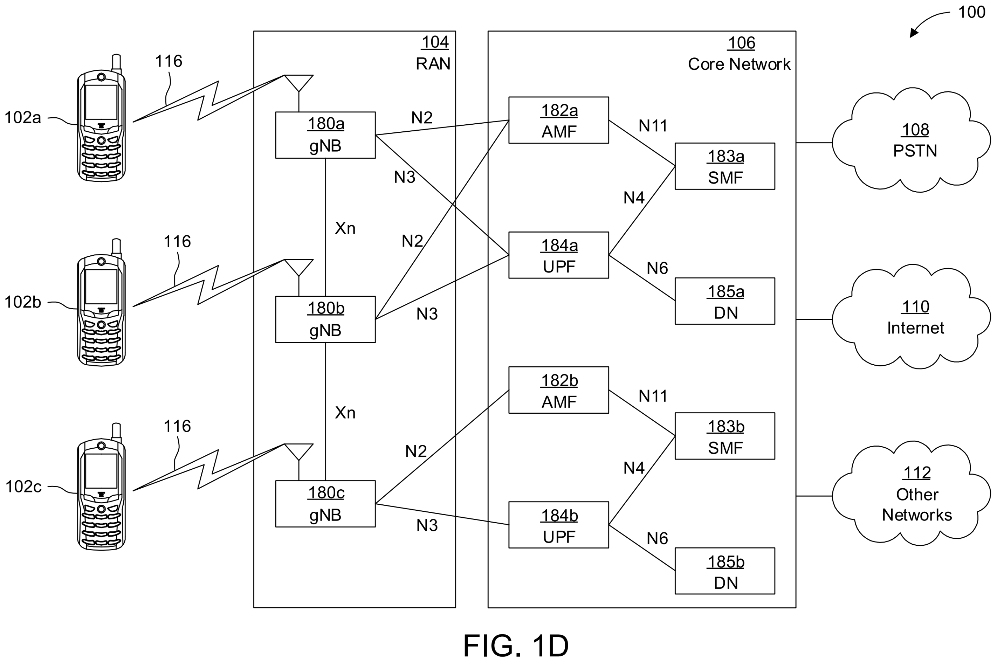

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTls) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The following terminologies may be used throughout this disclosure.

| | |
|---|---|
| AMF | Access and Mobility Function |
| IoT | Internet of Things |
| MM | Mobility Management |
| NAS | Non-Access Stratum |
| RAN | Radio Access Network |
| RRC | Radio Resource Control |
| SM | Session Management |
| SMF | Session Management Function |
| UDM | User Data Management |
| UDR | User Data Repository |
| UE | User Equipment |
| UPF | User Plane Function |
| PIN | Personal Internet of Things (IoT) Network |
| PE | PIN Element |
| PEMC | PIN element with management capability |
| PEGC | PIN element with gateway capability |
| UDM | User Data Management |
| UDR | User Data Repository |
| UE | User Equipment |
| UPF | User Plane Function |

The Internet of Things(loT) feature have been designed for devices that communicate using the traditional cellular network. Devices with loT capabilities require better power consuming performance and increased the network efficiency for bulk operations.

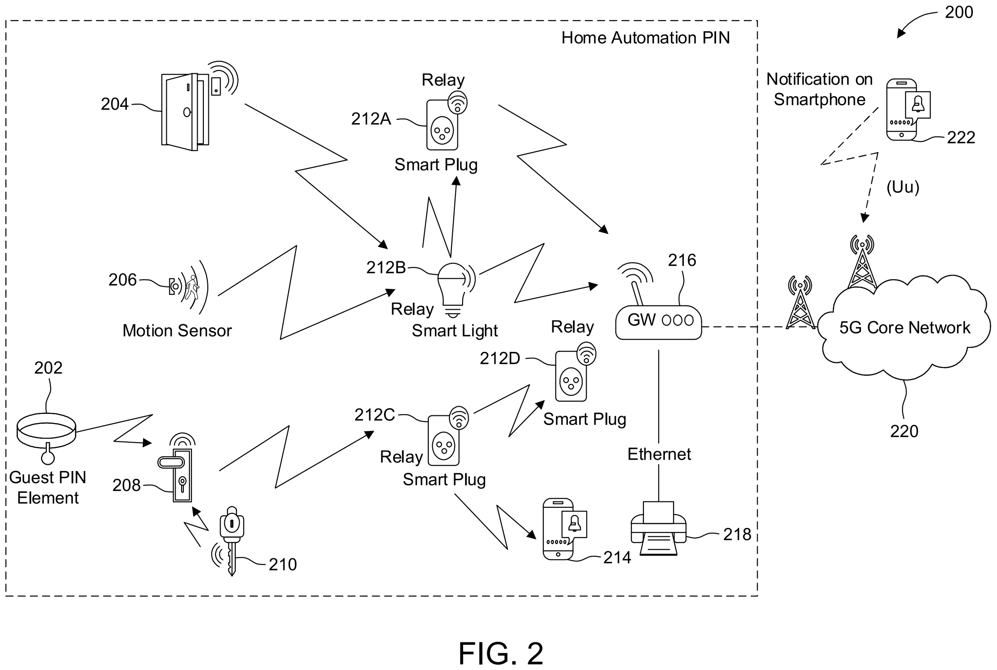

FIG. 2 is a diagram illustrating an example home automation Personal Internet of Things Network (PIN) 200, which may be used in combination with any of other embodiments described herein. When multiple loT devices are deployed in a private environment, the WTRUs with IoT capabilities can be organized in a Personal loT Network (PIN). For example, as illustrated in FIG. 2, in home environment, a guest device (or guest PE) 202, a security sensor 204, a motion sensor 206, a smart lock 208, a smart key 210, a smart plug 212A, a smart light 212B, smart plugs 212C, 212D, a smartphone 214, a printer 218, etc. may be managed by a residential gateway 216 and communicate with each other. The smart plug 212A, the smart light 212B, the smart plugs 212C, 212D may function as relay nodes for the guest device (or guest PE) 202, the security sensor 204, the motion sensor 206, the smart lock 208, and the smart key 210. In this example, all devices 202-216 in home may comprise a Personal loT Network (PIN). Each of them may be called PIN element (PE), and different PIN elements (PEs) may have different capabilities. For example, a residential gateway 216 can be a PIN Element (PE) with Gateway Capability (PEGC) to provide connections between PIN elements (PEs) 202-214, 218 and connections between 5G network 220 and PIN Elements 202-214, 218. A PIN Element (PE) with Management Capability (PEMC) may be a PIN Element (PE) that provides a means for an authorized administrator to configure and manage a PIN. In an example, a residential gateway 216 which is acting as a PEGC may support PIN management function as well and be a PIN element (PE) with management capability (PEMC). In another example, a smartphone 214 may act as a PEMC that manages PIN elements (PEs) 202-212, 218 in the home automation PIN 200. The smartphone 214 (i.e., PEMC) may directly communicate with the PEs 202-212, 218 or may communicate with the PEs 202-212, 218 through the residential gateway 216 (i.e., PEGC). In an embodiment, the PEMC and PEGC may be logical functions located in a single entity/device/WTRUs. In another embodiment, the PEMC and PEGC may be logical functions located in different, separate entities/devices/WTRUs. The PEMC and PEGC may include non-3GPP communication capabilities (e.g., Bluetooth, WiFi, Zigbee, Z-Wave, Bluetooth Low-Energy, or the like) and 3GPP communication capabilities (e.g., LTE, 5G NR, or the like) to communicate with PEs 202-218 and the 5G Core Network 220 including the smartphone 222 in the 5G Core Network 220. The PEs 202-212 may include non-3GPP communication capabilities (e.g., Bluetooth, WiFi, Zigbee, Z-Wave, Bluetooth Low-Energy, or the like) to communicate with the smartphone 214 (e.g., PEMC) and/or the residential gateway 216 (e.g., PEGC).The terms PIN Element (PE) with Management Capability, PE with Management Capabilities, PE Management Capability, PE Management Capabilities, PIN Management, WTRU with Management Capability, and/or any combination thereof may be used interchangeably throughout this disclosure. The terms PIN Element (PE) with Gateway Capability, PE with Gateway Capabilities, PE Gateway Capability, PE Gateway Capabilities, PIN Gateway, WTRU with Gateway Capability, and/or any combination thereof may be used interchangeably throughout this disclosure.

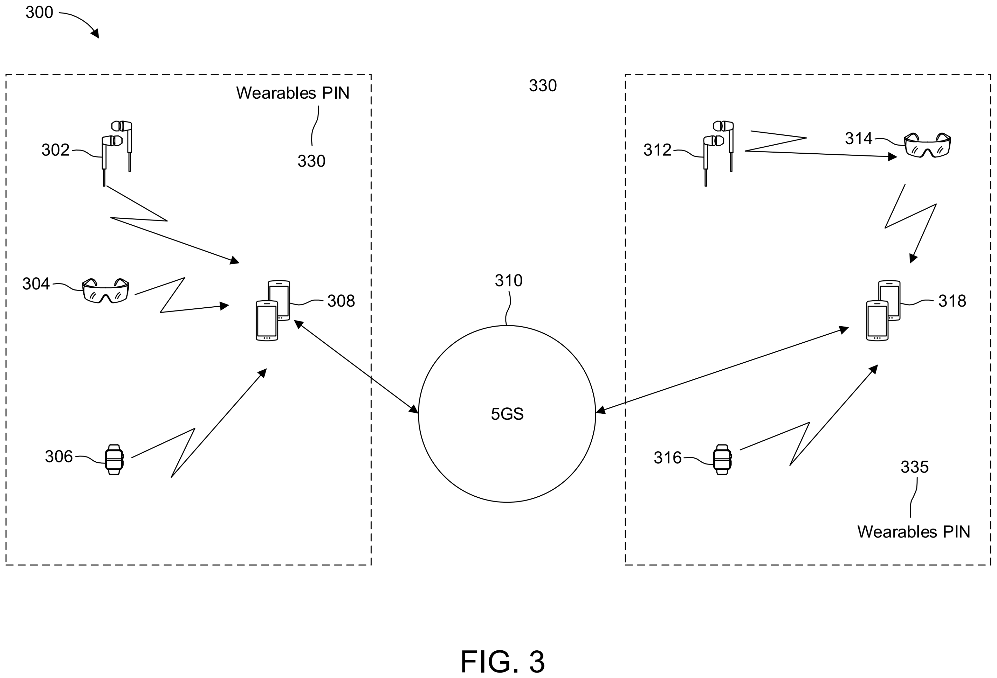

FIG. 3 is a diagram illustrating an example wearable PIN 300, which may be used in combination with any of other embodiments described herein. As illustrated in FIG. 3, wearable devices such as earphones 302, 312, smart glasses 304, 314, smart watches 306, 316, may comprise another kind of PIN, in which a smartphone 308, 318 may act as a PIN Element (PE) with Gateway Capability (PEGC) as well as a PIN element (PE) with management capability (PEMC). For example, a wearables PIN 330 may comprise a earphone 302, smart glasses 304, a smart watch 306, and a smartphone 308. The smartphone 308 may act as a PEMC and a PEGC for the earphone 302, the smart glasses 304, and the smart watch 306 that act as PEs in the wearable PIN 330. The wearables PIN 330 may be connected to the 5GS 310 via the smartphone 308. Similar, another wearables PIN 335 may coexist with the wearables PIN 330. The wearables PIN 335 may also comprise a earphone 312, smart glasses 314, a smart watch 316, and a smartphone 318. The smartphone 318 may act as a PEMC and a PEGC for the earphone 312, the smart glasses 314, and the smart watch 316 that act as PEs in the wearable PIN 335. The wearables PIN 335 may be connected to the 5GS 310 via the smartphone 318 . In another example, smart watches 306, 316, virtual reality (VR)/augmented reality (AR) glasses 304, 314, earphones 302, 312 and the like may communicate with each other in the PINs 330, 335 (or with other WTRUs via 5G network).

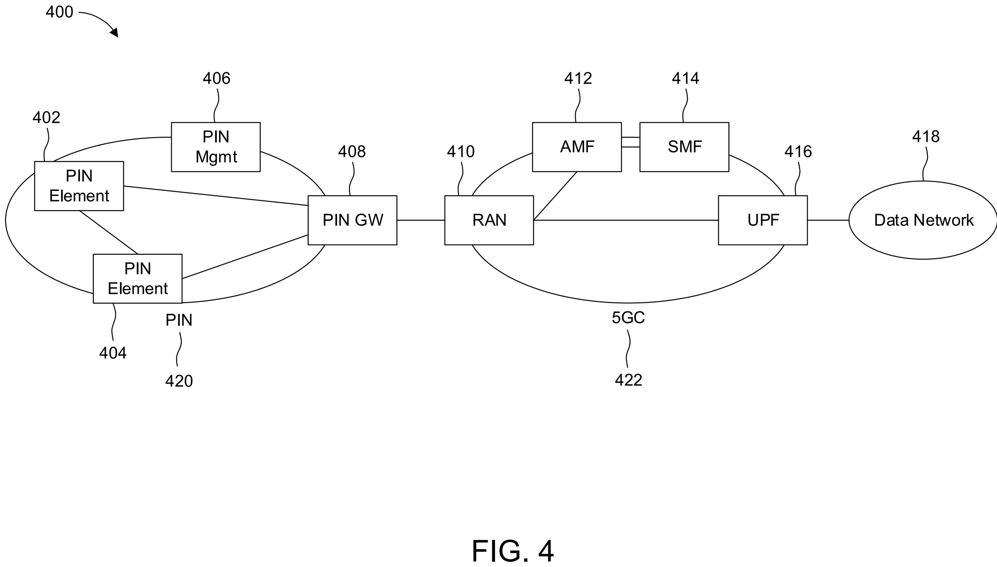

FIG. 4 is a diagram illustrating an example architecture for a Personal Internet of Things network (PIN) 400, which may be used in combination with any of other embodiments described herein. As illustrated in FIG. 4, the PIN 420 may include, but are not limited to, PIN Elements (PEs) 402, 404, PIN Management (PEMC) 406, and PIN Gateway (PEGC) 408. A PIN element (PE) 402, 404 may be a WTRU or non-3GPP device that can communicate within a PIN 420. A PIN management device (i.e., PEMC) 406 may be a WTRU or a PIN Element (PE) with capability to manage the PIN 420. A PEGC 408 may be a WTRU or a PIN Element (PE) that has the ability to provide connectivity to and from the 3GPP network such as the 5G core network 422 for other PIN Elements (PEs) 402, 404. The 5G core network 422 may comprise a RAN 410, an AMF 412, an SMF 414, and a UDF 416. The UDF 416 may provide the connection between the 5G network 422 and the data network 418.

As illustrated in FIG. 4, PIN elements (PEs) 402, 404 may communicate each other via PEGC 408 or directly. Alternatively or additionally, PIN elements (PEs) 402, 404 may communicate with the 5G system to obtain 5G services or communicate with a data network 418 via the 5G core network 422. the 5G core network 422 is an example of wireless network. The wireless network that the PEMC 406 and/or the PEGC 408 can communicate with, may include, but are not limited, GSM, CDMA, UMTS, LTE, and 5G.

As described above, the PIN element (PE) with management capabilities (PEMC) 406 and PIN element (PE) with gateway capabilities (PEGC) 408 can be a WTRU or a UE equipped with a 3GPP RAT and a non-3GPP RAT, and all other communications within the PIN 420 may be carried out via non-3gpp communication (e.g., WiFi, Bluetooth, or the like) by the PEMC 406 and the PEGC 408.

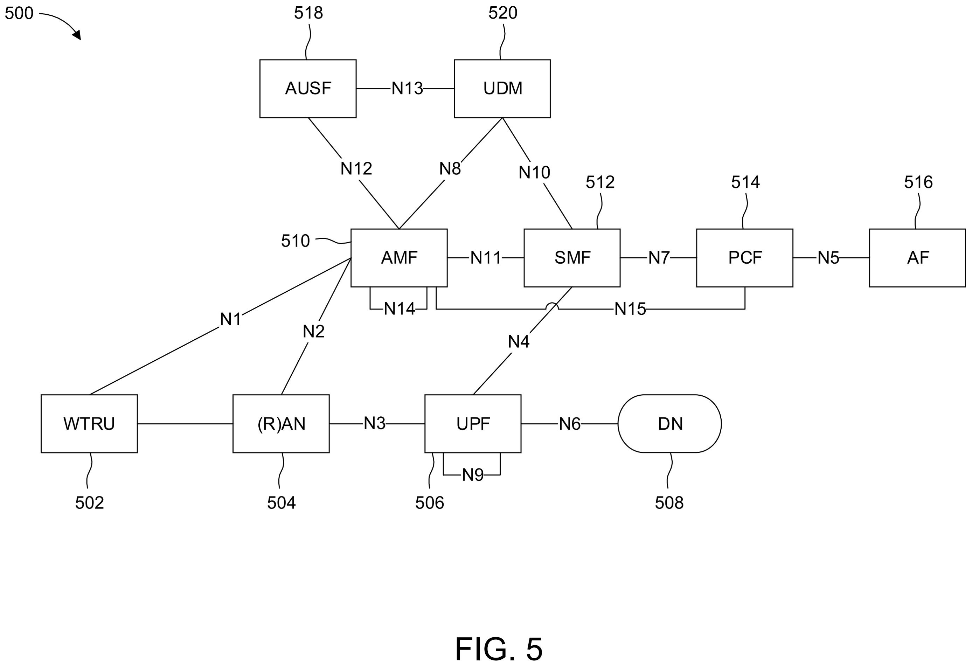

FIG. 5 is a diagram illustrating an example reference model of 5G or NextGen network 500, which may be used in combination with any of other embodiments described herein. As illustrated in FIG. 5, the 5G network may comprise WTRU 502, Radio Access Network (RAN) 504, User Plane Function (UPF) 506, Data Network (DN) 508, Access Control and Mobility Management Function (AMF) 510, Session Management Function (SMF) 512, Policy Control Function (PCF) 514, Application Function (AF) 516, Authentication Server Function (AUSF) 518, and Unified Data Management (UDM) 520.

The Radio Access Network (RAN) 504 may refer to a radio access network based on the 5G RAT or Evolved E-UTRA that connects to the NextGen core network.

The Access Control and Mobility Management Function (AMF) 510 may include, but are not limited to, the following functionalities: Registration management, Connection management, Reachability management, Mobility Management, and the like.

The Session Management Function (SMF) 512 may include, but are limited to, the following functionalities: Session Management (including Session establishment, modify and release), WTRU IP address allocation, Selection and control of UP function, and the like.

The WTRU or PE with Management Capability (PEMC) may be responsible to create and manage the PIN, whereas the WTRU or PE with Gateway Capability (PEGC) may facilitate the connectivity of PE and PEMC with the CN.

A PIN may comprise different PIN elements (PEs) with different characteristics such as wearable devices, home automation devices, devices mounted on vehicles, in the office or smart industrial automation devices, having different requirements and roles in terms of size, weight, power consumption, mission critical, high bandwidth and so forth. Users based on the need may create a network (PIN) of all or subset of these devices (i.e., PEs) which can be static or dynamic in nature.

It is unclear how to create a PIN, authorizing/de-authorizing PEs, authorizing/de-authorizing PEMC, authorizing/de-authorizing PEGC, and activation/deactivation of the PIN regardless of whether it is network or WTRU that initiates the PIN creation. Thus, mechanisms such as how to create a PIN, how the PEs are authorized or de-authorized to communication with in a PIN, how the PEMC gets authorization and de-authorization for PIN creation, how the PEGC gets authorization and de-authorization for the PIN creation, how to update or recreate a PIN, how to activate or deactivate a PIN, and establish the time validity of the PIN and its elements, are needed.

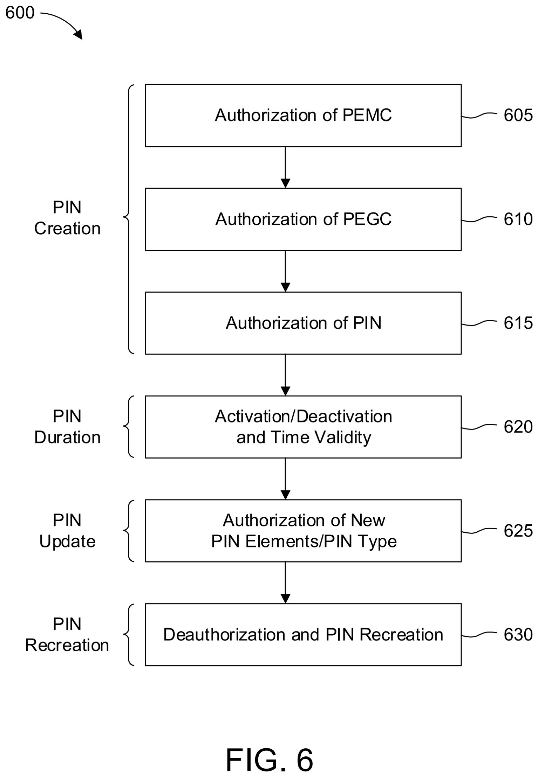

Embodiments for PIN creation, PIN recreation, PIN authorization and deauthorization, PIN activation and deactivation, and PIN validity duration are described herein. FIG. 6 is a diagram illustrating an example PIN management 600, which may be used in combination with any of other embodiments described herein.

Embodiments for PIN creation are described herein. As illustrated in FIG. 6, the PIN creation may comprise authorization of PEMC 605, authorization of PEGC 610, and/or authorization (or activation) of PIN 615. WTRU-initiated PIN creation may imply that the PIN creation is initiated by a PEMC. The PEMC may first request and get authorization to act as a PEMC at 605. A PEGC may independently request and get authorization at 610, but it may be selected and added to the PIN by the PEMC. The PEMC and the PEGC may establish direct connection with each other via PC5 or indirect via Uu. At 615, PEs may establish connection with the PEMC and request authorization to be part of PIN, where the request for PIN creation is forwarded by the PEMC to the CN, which maybe authorized by the CN or by the third party PIN server. It is noted that the PEMC and PEGC can be logical entities in a WTRU or a device equipped with 3GPP communication capabilities and non-3GPP RAT capabilities, or separate entities equipped with 3GPP communication capabilities and non-3GPP RAT capabilities.

NW-initiated PIN creation may imply that the PIN creation is initiated by a PIN server. The PIN server may request the CN to provide the information of all available PEMC, PEGC and PEs meeting certain criteria. The PIN server, based on a specific service or application, may then create a PIN for the available PEs, PEMCs and PEGCs.

Embodiments for PIN duration are described herein. At 620, the CN may provide one or more timers for the validity duration of PEMC, PEGC and/or PIN. The one or more timers for the PIN, PEMC and/or the PEGC may start as soon as CN authorizes them. Alternatively or additionally, the PIN validity timer value may start after the PIN activation indication is sent from the PEMC to the CN. PIN is active as long as the PIN timer, PEMC timer, and/or PEGC timer is valid. PIN may be deactivated as soon as the time period for one of the timers expires. Alternatively or additionally, the PIN may be deactivated based on an event or a trigger by the WTRU (e.g., PEMC) or by the CN. The term timer may be referred to as a clock, counter, duration, time unit, or any other device/value configured to measure a period of time throughout this disclosure.

Embodiments for PIN update are described herein. Once a PIN is created and communication is established, at 625, a PIN may be updated if one or more PEs are added, modified, or removed from the PIN. The change in PEs may not change PIN type or require reauthorization but may cause different QoS requirements (e.g., requiring modification of existing PDU session or updating QoS flow).

Similar to above, an existing PIN may be updated by the service provider (e.g., a PIN server). It may be due to the change in the services and operations, which requires to add, modify, or remove any PEs. Hence, the PIN update may be initiated based on the service requirements.

Embodiments for PIN recreation are described herein. Similar to the PIN update where new PIN elements (PEs) may join or leave the PIN, if a PE that is joining or leaving belongs to such a PE category that changes PIN type or may belong to a secure PIN type, the PE may not be authorized to join the PIN but recreation of PIN may be required where PEs are authorized by the PEMC at 630. Recreation of PIN may imply that the PEMC and PEGC remain connected and do not require reauthorization by the network. However, due to PEs joining or leaving, old PIN may be discarded, and authorization for new PIN may be initiated by the PEMC.

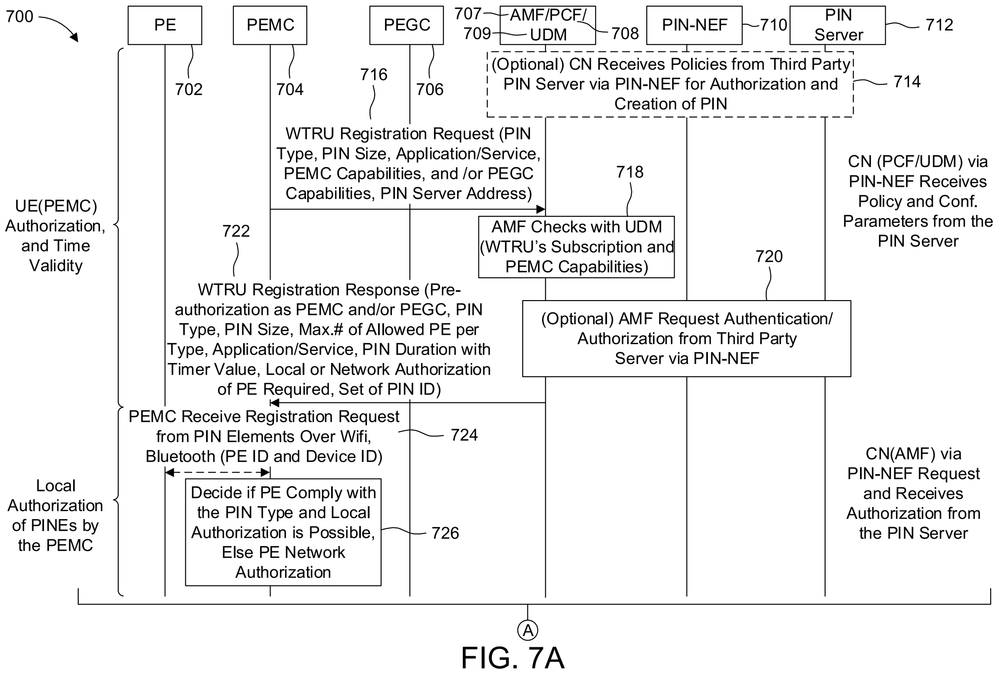

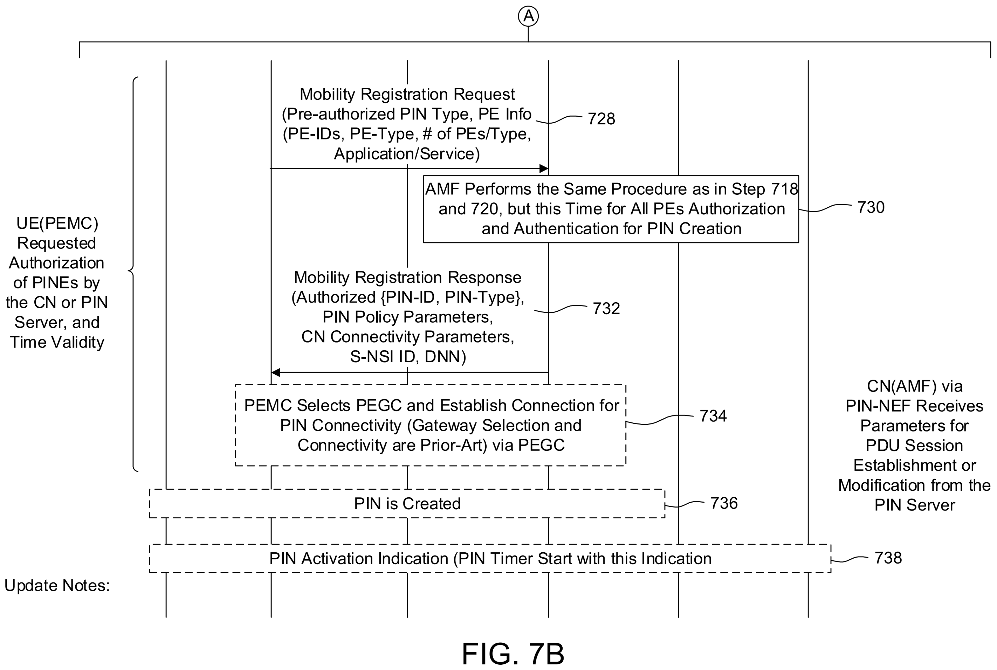

Embodiments for WTRU-initiated PIN creation are described herein. FIGs. 7A and 7B are diagrams illustrating an example WTRU-initiated PIN creation 700, which may be used in combination with any of other embodiments described herein. The WTRU-initiated PIN creation may include four stages: 1) capability negotiation and policy provisioning between PEMC and AMF/UDM/PCF; 2) authorization of PEMC and parameter exchange, which also requests PIN creation, PIN ID and context are generated at this stage; 3) PIN elements authorization to join the PIN; and 4) PIN creation and activation indication.

As illustrated in FIG. 7A, at step 714, for the PIN authorization and creation, CN comprising AMF 707/PCF 708/UDM 709 and PIN-NEF 710, may require certain parameters that are received as policy parameters from the third party PIN server 712 via PIN-NEF 710. These parameters may include, but are not limited to, preauthorized PIN types, and PE types for which CN do not need authorization from the PIN server. Alternatively or additionally, these parameters may include, but are not limited to, PIN types and PE types for which authorization can only be performed by the PIN server.

At step 716, a WTRU (e.g., PEMC 704) may send a NAS message (e.g., registration request) to AMF 707. The NAS message may include, but is not limited to, PEMC capabilities (or PEMC capability), PEGC capabilities (or PEGC capability), Applications or Services supported by the PEMC, PIN server address, PIN type and/or PIN size. The PEMC capabilities may indicate that the WTRU (i.e., PEMC 704) can provide management functionality and/or the WTRU (i.e., PEMC 704) may have PE functionality. The PEGC capabilities may indicate that a WTRU (i.e., PEGC 706) can provide gateway functionality and/or the WTRU (i.e., PEGC 706) may have PE functionality. The Applications or Services supported by the PEMC may indicate the type of applications and services that the PEMC 704 can provide PE 702 in the PIN. For example, the applications or services supported by the PEMC 704 may include loT, streaming, health care, VR, and/or AR applications/services. The PIN type may indicate the type of PIN network that the PEMC 704 can provide. The PIN type may include, but are not limited to, loT, streaming, health care, and the like.

At step 718, the AMF 707 may receive the PEMC capabilities and check with the UDM 709 and/or the PCF 708 if the WTRU (i.e., PEMC 704) is allowed to act as PEMC. The UDM 709 may include subscription information of the WTRU in the network. The AMF 707 may also receive the PEGC capabilities.

At step 720, the AMF 707 may request authorization for PEMC 704/PEGC 706 from the PIN server 712 before responding to the NAS message (e.g., registration request) from the WTRU (i.e., PEMC 704). This action may be based on several back and forth messaging between the AMF 707 and the PIN server 712 via the PIN-NEF 710. Specifically, the AMF 707 may send WTRU user ID, PEMC capabilities, Applications or Services supported by the PEMC 704, PIN type, PIN size, and/or the like to the PIN server 712. The PIN server 712 may respond with authorized PIN type, PIN size, number of PE per type, set of PIN ID, list of PIN servers, the validity duration for the authorization of PEMC/PEGC, and/or the like. It is noted that the step 720 may be optional depending on the preauthorization information that the AMF 707/PCF 708/UDM 709 has from the PIN server 712 with respect to the PEMC/PEGC capabilities.

At step 722, the AMF 707 may send a NAS message (e.g., registration response) to the WTRU (i.e., PEMC 704). The NAS message may include, but are not limited to, PEMC authorization, pre-authorization to initiate PIN creation with specific characteristics (e.g., PIN type, PIN size, number of PE per type) that may indicate or specify, for which PEs, local authorization by PEMC is sufficient or for which PEs, network authorization (e.g., by the PIN server 712) is required. For example, if the AMF 707 already has pre-authorization information of the PEMC 704, the AMF 707 may send the PEMC authorization to the WTRU (i.e., PEMC 704) with an indication that the PEMC 704 is authorized to act as a PEMC 704 in the PIN. If the AMF 707 does not have pre-authorization information of the PEMC 704, the AMF 707 may send a request to the PIN server 712 as disclosed in step 720. The PIN type included in the NAS message may indicate the type of PIN that the PEMC 704 is allowed to create. The NAS message (e.g., registration response) may include multiple PIN types for multiple PINs. The set of PIN ID may include one or more PIN IDs that the PEMC 704 is allowed to create or use. The PIN size may indicate the total number of PEs allowed in the PIN. The maxim number of PE per type may indicate a maximum number of allowed PEs per PIN type. For example, the maxim number of PE per type may indicate that 20 loT devices are allowed for loT PIN type, but only one streaming device is allowed for streaming PIN type. The NAS message (e.g., registration response) may also include PIN, PEMC and/or PEGC validity duration with timer value, set of PIN IDs, and authorized applications/services. The PIN, PEMC, and/or PEGC validity duration may be milliseconds, seconds, minutes, hours, days, months, and/or the like.

At step 724, the WTRU (i.e., PEMC 704) may receive one or more connection requests from PE(s) 702, for example, over WiFi or Bluetooth, which is out of scope for 3GPP. The PEMC 704 may have received device IDs and PE IDs that may be used on for PIN creation. The connection request received from a PE(s) 702 may include, but are not limited to, device ID, PE ID, PE type and/or PE capability. The PE type may indicate the device type of the PE, such as a sensor, a light, a plug, a printer, a cellular phone, a wearable device, an augment reality (AR) device, a vehicle-mounted device, and a virtual reality (VR) device. The PE capability may indicate the radio access technology that the PE 702 can support, such as Bluetooth, Wi-Fi, Bluetooth Low-Energy (BLE), Zigbee, and Z-Wave.

At step 726, once the WTRU (i.e., PEMC 704) is connected with an available PE, the WTRU (i.e., PEMC 704) may first determine whether this particular PE is from pre-authorized PE type, which could be authorized locally by the PEMC 704. If the PE type can be authorized locally, the WTRU (i.e., PEMC 704) may authorize the connection request from the PE 702. In one example, the PEMC 704 may authorize the connection request based on the PE type that is compatible with the pre-authorized PE type and/or the pre-authorized PIN type. The pre-authorized PE type or the pre-authorized PIN type may be received from the AMF 707 (e.g., the NAS response message at step 722). In another example, the PEMC 704 may authorize the connection request based on the PE type and/or the PE capability that is/are compatible with the pre-authorized PIN type. For example, if the PE type is an loT device and the pre-authorized PIN type is temperature sensing, the WTRU (i.e., PEMC 704) may authorize the connection request from the PE 702. If the PE type is an loT device but the pre-authorized PIN type is streaming media, the WTRU (i.e., PEMC 704) may not authorize the connection request from the PE 702.

The WTRU (i.e., PEMC 704) may connect with all the available PEs 702, desired and discoverable for a particular service. The PEMC 704 may have pre-authorized some PEs locally, but for the rest, the PEMC 704 may have to request authorization from the CN or from the third party PIN server 712. When the network authorization is required for PEs 702, at step 728, the WTRU (i.e., PEMC 704) may send a mobility registration request to the AMF 707 including pre-authorized PIN type, PEs info (e.g., PE ID, PE capability and/or PE type), application/service and PIN server address, for example, chosen from the list received in step 720.

Step 730 may be the same as steps 718 and 720, however, the parameters may slightly differ. The authorization may additionally or alternatively be done as example procedures described below:

In one example, the AMF 707 may itself authorize PEs 702 as described in step 718. However, the CN may additionally or alternatively provide the PIN validity duration with timer value.

In another example, if the PIN server 712 is required to authorize, then the AMF 707 may send a request as described in step 720. Specifically, the AMF 707 may send pre-authorized PIN type, PEs info (e.g., PE ID, PE capability, and/or PE type), application/service to the PIN server address chosen by the PEMC. The PIN server 712 may respond with a list of authorized PEs with PE IDs, PIN validity duration with timer value.

At step 732, the AMF 707 may send a mobility registration response to the PEMC 704 and include authorized PIN type, PIN ID, PIN policy parameters if new, CN connectivity parameter(s), and PIN validity duration with timer value. It may also include S-NSSAI NSI ID or DNN. The CN connectivity parameter(s) may include one or more allowed Quality of Service (QoS) requirements associated with the PE type of the PE 702.

At step 734, the WTRU (i.e., PEMC 704) may establish connection with the PEGC 706 for PIN connectivity. At this step, the PEMC 704 may perform PEGC selection and request PDU session establishment with the PEGC 706. In one example, a direct unicast communication link may be established between the PEMC 704 and the PEGC 706, assuming that both the PEMC 704 and the PEGC 706 are capable of the direct communication via PC5.

At step 736, a PIN is created and a PIN activation indication may be sent to the CN and/or to the PIN server 712. The CN and/or the PIN server 712 may initiate the PIN validity timer.

In one embodiment, once the WTRU (i.e., PEMC 704) is authorized by the network following the steps 716-722 in WTRU-initiated PIN creation 700, the PEMC 704 may have established a PDU session with the CN. Then the remaining procedure for PE authorization and PIN creation may alternatively or additionally be performed over the user plane utilizing the PDU session. The procedure may be described as follow:

First, the PEMC 704 and PEGC 706 may be authorized (e.g., independently). Both the PEMC 704 and the PEGC 706 may discover each other and a PDU connection between the PEMC 704 and the PIN server 712 ma be established.

Second, the PEMC 704 may receive a connection request from PEs 702, for example, over WiFi or Bluetooth, which is out of scope for 3GPP. However, the PEMC 704 may have received device IDs and PE IDs that could be used further on for the PIN creation.

Third, The PEMC 704 may trigger secondary authorization, where application in the PEMC 704 sends PEs info to the application in the PIN server including, for example, PIN type, PEs info (e.g., PE ID, PE type, and # of PEs), application/service, and/or the like.

Lastly, the application in the PEMC 704 may receive the PIN authorization from the PIN server 712.

In another embodiment, a WTRU may perform the authorization to act as a PEGC 706 in the same way as it is done for the PEMC 704 in the steps 716-722 in WTRU-initiated PIN creation 700. The PEMC 704, which is pre-authorized, may discover and establish connection with the suitable/available PEGC 706 and connectivity with the network via the PEGC 706.

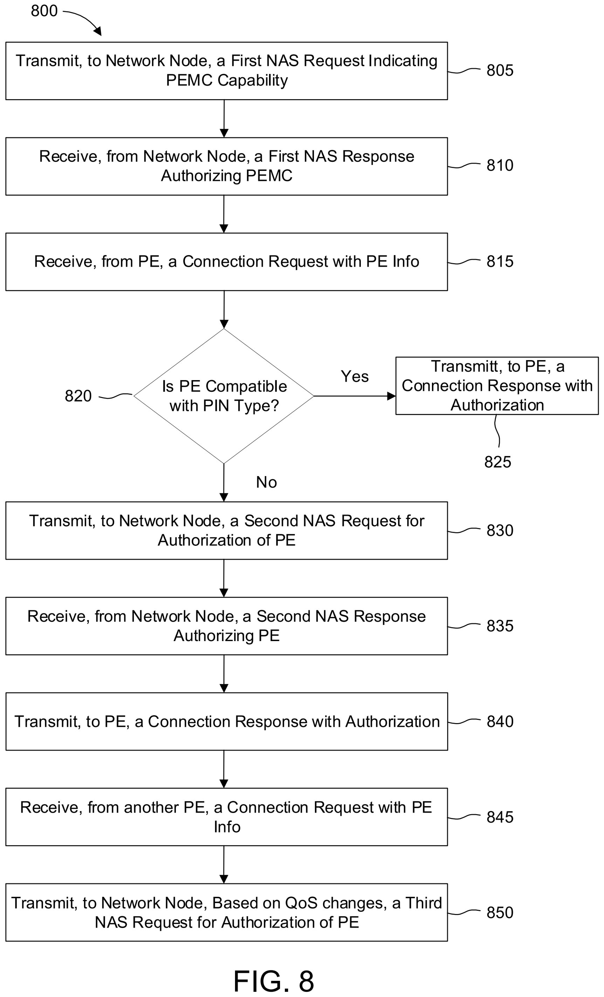

FIG. 8 is a diagram illustrating an example PIN management procedure 800, which may be used in combination with any of other embodiments described herein. At step 805, a first WTRU may transmit, to a network node in a cellular network, a first non-access stratum (NAS) request message. The first NAS request message may indicate that the first WTRU is capable of acting as a PEMC in a PIN. The network node in the cellular network may be a base station (BS), AMF, PCF, UDM, NEF, or any other device/entity/function in a Core Network (CN) or RAN that can communicate with the WTRU for the PIN creation/management. The cellular network may include, but is not limited to, Global System for Mobile (GSM), Universal Mobile Telecommunications System (UMTS), Long Term Evolution (LTE), 5G New Radio (NR), and 6G. In response to the first NAS request message, at step 810, the WTRU may receive, from the network node in the cellular network, a first NAS response message. The first NAS response message may include, but is not limited to, authorization information of the first WTRU's request, an authorized PIN type, and one or more validity duration of the PIN/PEMC/PEGC. The authorization information may indicate that the WTRU is allowed to act as the PEMC in the PIN to be created. The authorized PIN type may include, but is not limited to, home security, industrial security, home automation, industrial automation, healthcare monitoring, temperature sensing, motion detection, augmented reality (AR), virtual reality (VR), a connected vehicle, and an autonomous vehicle.

At step 815, the first WTRU may receive, from a second WTRU, a connection request message that includes PE information associated with the second WTRU. The PE information associated with the second WTRU may include, but are not limited to, a PE type of the second WTRU and a PE capability of the second WTRU. The PE type may include, but is not limited to, a sensor, a light, a plug, a printer, a cellular phone, a wearable device, an augment reality (AR) device, a vehicle-mounted device, and a virtual reality (VR) device. The PE capability may indicate a non-3GPP RAT that the PE can support. Such a non-3GPP RAT may include, but is not limited to, Bluetooth, Wi-Fi, Bluetooth Low-Energy (BLE), Zigbee, and Z-Wave. At step 820, if the PE type and the PE capability are compatible with the authorized PIN type, at step 825, the WTRU may transmit, to the second WTRU, a connection response message indicating that the second WTRU is authorized to act as a PIN element (PE) of the PIN or join the PIN. For example, if the PE type is a plug, the PE capability is Zigbee, and the pre-authorized PIN type is home automation, the first WTRU may authorize the connection request from the second WTRU. If the PE type is a plug, the PE capability is Zigbee, but the pre-authorized PIN type is streaming media, the first WTRU (i.e., PEMC 704) may not authorize the connection request from the second WTRU. In an embodiment, the first WTRU may only use the PE type and the authorized PIN type to determine the compatibility. In another embodiment, the first WTRU may only use the PE type and the authorized PE type to determine the combability. Once the second WTRU is authorized by the first WTRU or after the first WTRU send the connection response message to the second WTRU, the first WTRU may transmit a PIN activation indication to the CN or the PIN server.

At step 820, if the first WTRU determines that the PE type and the PE capability are incompatible with the authorized PIN type, at step 830, the first WTRU may transmit, to the network node in the cellular network, a second NAS request message requesting a core network (CN) or a PIN server for authorization of the second WTRU to act as the PE of the PIN. The second NAS request message may include the PE information associated with the second WTRU as described above. At step 835, the first WTRU may receive, from the network node in the cellular network, a second NAS response message indicating that that the second WTRU is authorized to act as the PE of the PIN by the CN or the PIN server. The second NAS response message may include, but is not limited to, an authorized PIN type, a PIN ID, one or more CN connectivity parameters, and validity duration of the PIN. Once the second WTRU is authorized by the CN or the PIN server as the PE, at step 840, the first WTRU may transmit, to the second WTRU, another connection response message indicating that the second WTRU is authorized to act as the PE of the PIN. The one or more CN connectivity parameters may include, but are not limited to, one or more allowed Quality of Service (QoS) requirements associated with the second WTRU or the PE type of the second WTRU. Once the second WTRU is authorized by the CN or the PIN server or after the first WTRU send another connection response message to the second WTRU, the first WTRU may transmit a PIN activation indication to the CN or the PIN server.

In an embodiment, if the received validity duration of the PEMC/PEGC/PIN expires, the first WTRU may transmit, to the network node in the cellular network, a third NAS request message for reauthorization of the second PE. The third NAS request message may request the core network (CN) or the PIN server for reauthorization of the second WTRU to act as the PE of the PIN. The third NAS request message may include the PE information associated with the second WTRU as described above

After the PIN is created, at step 845, the first WTRU may receive, from a third WTRU, another connection request message. The another connection request message may include PE information associated with the third WTRU. The PE information associated with the third WTRU may include, but is not limited to, a PE type of the third WTRU and a PE capability of the third WTRU. If one or more QoS requirements associated with the third WTRU or the PE type of the third WTRU are different than the one or more allowed QoS requirements associated with the second WTRU or the PE type of the second WTRU, at step 850, the first WTRU may transmit, to the network node in the cellular network, a third NAS request message requesting the CN or the PIN server for authorization of the third WTRU to act as a PE of the PIN. The third NAS request message may include the PE information associated with the third WTRU as described above.

It is noted that the first WTRU may be capable of both a 3GPP RAT and a non-3GPP RAT, and the second WTRU is capable of the non-3GPP RAT. The 3GPP RAT may include, but is not limited to, Global System for Mobile (GSM), Universal Mobile Telecommunications System (UMTS), Long Term Evolution (LTE), 5G New Radio (NR) and 6G. The non-3GPP RAT may include, but is not limited to, Bluetooth, Wi-Fi, Bluetooth Low-Energy (BLE), Zigbee, and Z-Wave. The PE capability of the second WTRU or the third WTRU may indicate that the second WTRU or the third WTRU can support the non-3GPP RAT.

Embodiments for PIN update and recreation are described herein. In these embodiments, it may be assumed that a PIN is created and connection between the PIN, CN and PIN server is established. If one or more PEs join or leave the PIN, they may or may not significantly impact the PIN. If the change is significant in terms of change in QoS requirements or resulting in change of PIN type, the PIN may be updated or recreated based on the embodiments described herein. Specifically, once a PIN is created and is in operational state, following scenarios can happen: (1) PEs in the PIN may become unavailable; (2) New PEs become available to join the PIN; (3) The desired or allowed QOS may change due to joining/leaving or unavailability of PEs; and (4) The PIN type and characteristics may change, for example, especially for secure or emergency related PIN.

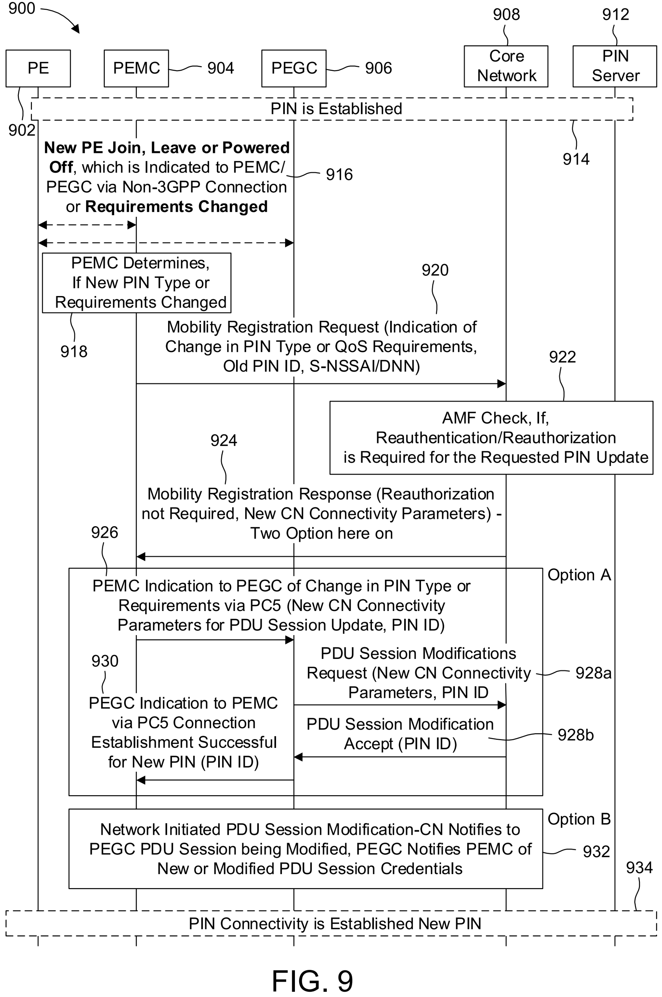

Embodiments for WTRU-initiated PIN update are described herein. In this embodiment the scenario describes the PIN update may be initiated by a WTRU(e.g., PEMC or PEGC). FIG. 9 is a diagram illustrating an example WTRU-initiated PIN update 900, which may be used in combination with any of other embodiments described herein.

As described above, at step 914, it is assumed that a PIN is established. At step 916, PIN elements 902 may become available or unavailable. The PEMC 904 may become aware of it. A new PE 902 may connect to the PEMC 904 to inform about availability. The existing PE may be out of service and detected by the PEMC 904. The existing PE 902 may provide additional service, and QOS requirement may change (e.g., aggregate QOS from PEGC 906 to 5GS). One or more new PEs 902 that want to join the PIN or one or more existing PEs 902 that want to leave the PIN may trigger the update on the PIN and/or recreation/reauthorization of the PIN.

At step 918, the PEMC 904 may determine if the update in PIN in step 916 has any impact on the type or QoS requirements. At step 920, the PEMC 904, if any change in the PIN type or QoS is determined, the PEMC 904 may send a NAS message (e.g., mobility registration request to AMF in the CN 908) and include parameters such as old PIN ID, S-NSSAI, DNN, indication of the change in PIN type/QoS, and newly added/removed PE info (e.g., PE IDs and PE type). At step 922, the AMF may check with the CN 908 and/or with the PIN server 912 if reauthorization is required. If reauthorization is not required, QoS parameters may be updated. At step 924, the AMF via NAS signaling, for example, using a mobility registration response, may send new CN connectivity parameters to the PEMC 904 for PDU session modification or updating QoS flows.

Steps 926-930 and step 932 describe the two alternative or additional approaches. In the first scenario, at step 926, NAS signaling may happen between the CN 908 and the PEMC 904, which is not known by the PEGC 906. Hence, the PEMC 904 may send an indication to the PEGC 906 to notify the change in QoS requirements and provide new CN connectivity parameters for PDU session modification and the PIN ID. At step 928a, the PEGC 906 may initiate session modification, and send a PDU session modification request to SMF including new CN connectivity parameters, PIN ID. At step 928b, the SMF may send session modification accept that may include PIN ID. At step 930, the PEGC 906 may send a PEGC indication to the PEMC 904 indicating that connection is established successfully for the updated PIN. The PEGC indication may include the PIN ID.

In the second scenario, network initiated PDU session modification may be established at step 932, where AMF notifies SMF of change in PIN QoS requirements after step 924. The SMF may notify the PEGC 906 that the PDU session is modified. The PEGC 906 may notify the PEMC 904 of modified PDU session including the connectivity parameters for the PIN ID. At step 934, the PIN connectivity may be established with the new PIN.

Embodiments for WTRU-initiated PIN recreation are described herein. This embodiment describes that the PIN recreation may be initiated by the WTRU (e.g., PEMC or PEGC). By recreation, it may imply that the PEMC/PEGC are authorized and connected to the CN but PIN type has changes due to PEs' joining, leaving or becoming unavailable that deauthorizes a PIN. Such an action may first require the PIN to deregister and request new authorization for PIN recreation with updated PEs info.

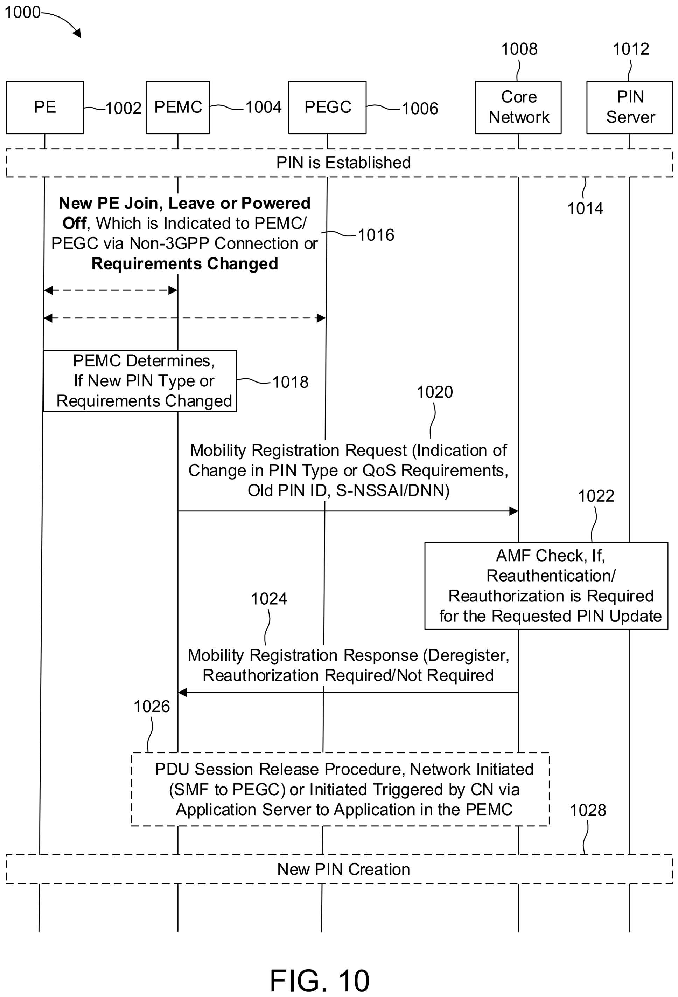

FIG. 10 is a diagram illustrating an example WTUR-initiated PIN recreation 1000, which may be used in combination with any of other embodiments described herein. At step 1014, it is assumed that a PIN is established. Steps 1016-1022 are the same as those described in FIG. 9 and are not explained herein for brevity.

At step 1024, if reauthorization is required because the new PEs 1002 joining or those leaving the PIN may have significantly different properties (e.g., PE 1002 is critical for safety or security), AMF via NAS signaling (e.g., mobility registration response) may send to the PEMC 1004 the PIN deregistration notification and request reauthorization for PIN recreation. At step 1026, PDU session may be released. This may be initiated by the PEMC 1004 which requests the PEGC 1006 to initiate the PDU session release procedure. Alternatively or additionally, the PDU session release may be initiated by the CN 1008 (e.g., SMF), or by the application server (or the PIN server 1012) requesting the application in the PEMC 1004. At step 1028, the new PIN may be created in the same way as illustrated in FIG. 7 (.e.g., steps 724-738). This PIN creation may be referred to as PIN recreation, as the PEMC 1004, and PEGC 1006 may remain the same but the PIN is created for the updated PEs.

Embodiments for PIN activation and deactivation are described herein. PIN activation and deactivation may need to be handled for the PIN management. Embodiments for PIN activation and deactivation may include, for example, three scenarios: (1) timer based (i.e., where WTRU or the network based on timer value determine the activation and deactivation of the PIN upon expiry of the timer); (2) also timer based but when the timer value is extended by the CN or PIN server; and (3) when PIN may be deactivated by the network operator or an authorized third party PIN server, which could be instantaneous and event based trigger.

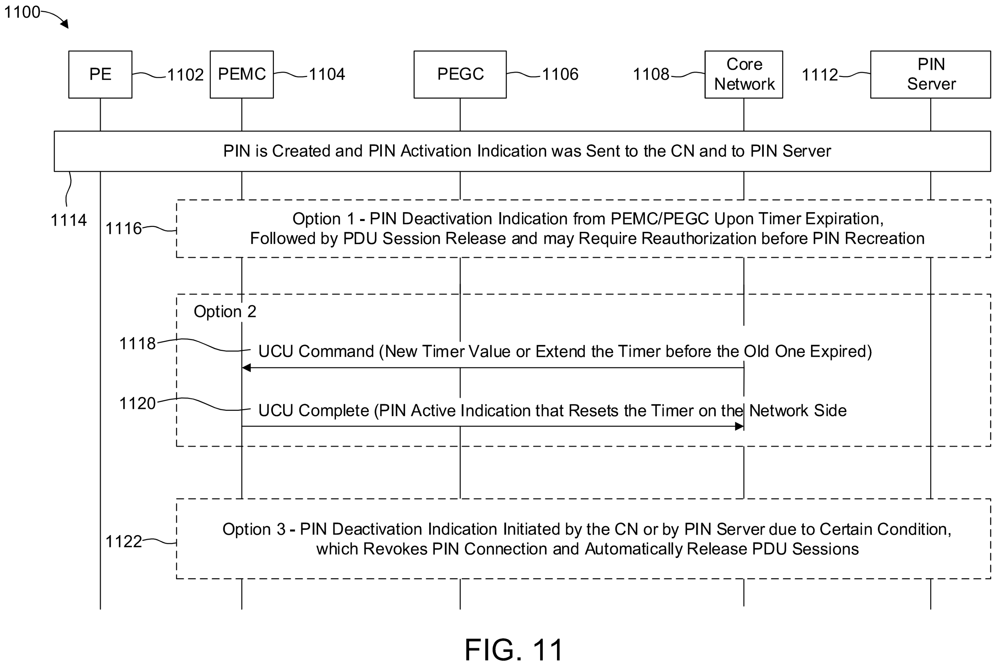

FIG. 11 is a diagram illustrating example PIN activation/deactivation with validity timer 1100, which may be used in combination with any of other embodiments described herein. At step 1114, as described above, once a PIN is created, it may or may not be activated right away. However, as soon as the PIN is activated, an indication may be sent to the CN 1108 and/or to the PIN server 1112 specifying the activation of PIN and the reference time value.

In the first scenario (i.e., Option 1 1116), PIN validity duration time may expire and the PEMC 1104 may send PIN deactivation indication to the CN 1108 and/or to the PIN server 1112. It may also trigger PDU session release and PIN deregistration. The PIN timer may have expired and the PIN may be dissolved, but the PEMC 1104 and PEGC 1106 may still be authorized and connected to the CN 1108 for PIN recreation. They may not be required to perform reauthorization.

In the second scenario (i.e., Option 2 1118), before the PIN validity time expires, if there is no major change in the PIN with respect to the type, size, and/or the like, the CN 1108 may simply extend the time or reset it. The updated parameters may be sent via UE Configuration Update (UCU) command to the WTRU (e.g., PEMC 1104).

The WTRU (e.g., PEMC 1104) may respond with the UCU complete message or indication. The UCU complete message may include, but is not limited to, PIN active indication that will sync the clock on the WTRU (e.g., PEMC 1104) and the CN 1108 for the timer duration.

In the third scenarios (i.e., Option 3 1122), PIN deactivation indication may be initiated by the CN 1108 and/or by the PIN server 1112 due to certain condition, which revokes PIN connection and automatically release PDU sessions.

Embodiments for network-initiated PIN creation are described herein. The network-initiated PIN creation may be achieved, for example, in two steps. The first step is the same as it is illustrated in FIG. 7. With that, the network may have information about the available PEMC, PEGC and PEs. Assuming that it is known, FIG. 11 illustrates an example network-initiated PIN creation 1200, which may be used in combination with any of other embodiments described herein. The network-initiated PIN creation 1200 may be initiated by a managed service provider. The service provider can choose desired PE 1202, PEMC 1206 and PEGC 1204 to provide service. It is noted that the network may refer to as any 3GPP network such as a 5G system (5GS) comprising a CN and a RAN. The network may include AMF/SMF 1208, and PIN-NEF 1210.

At step 1214, the service provider may query for available PEs 1202 by providing Application/Service name, Location, and/or Service Area. The Application/Service name may be the service/application that the service provider wants to provide. It can be a string, identifying the services such as "GAMING", "ARNR", "SURVILLENCE", "HEALTH," and/or the like. It may be assumed that the network (e.g., 5GS) is aware of the service name as part of business agreement. The location may be Tracking Area Identity (TAI), EUTRA Cell Global Identifier (ECGI), and/or the like. The service area may be civic area code, Geo location, and/or the like. At step 1216, the network (e.g., 5GS) may find out if any PIN exists based on "Application Name", "Location" and "Service Area". If not, based on that information, it may try to find out available PEs 1202, PEMC 1206, and PEGC 1204, which can support the Application. At step 1218, the network (e.g., 5GS) may provide the List of Available PEs and PEMC 1206, PEGC 1204 available at the desired location to support the application. It may provide a list of information elements: List [{Location, Application Level PE ID}, {Location, Application Level PE ID}, ....] , Application Level PE ID is assumed to be the PE ID known to Service Producer.

At step 1219, the service provider may select a subset of PEs 1202, PEMC 1206 and PEGC 1204 to provide the desired service. It may initiate PIN creation by sending Create PIN message to the network (e.g., 5GS) at step 1220, which may include, but are not limited to: Application name (String); Service Location (TAI, CGI); and Selected Application-Level PE Ids (List of PE ID (1..n)). At step 1221, the selected PE ID may include PE 1202, PEMC 1206, and/or PEGC 1204. If the PE 1202, PEMC 1206, and/or PEGC 1204 are not available, the network (e.g., 5GS) may select another PE ID. At step 1222, the network (e.g., 5GS) may determine the devices (e.g., PE 1202, PEMC 1206, and PEGC 1204) based on Application-level ID and initiate PIN creation. The Application-level PE ID may be translated into the Network level PE ID. A PIN ID and associated PE IDs with the PIN ID may be created. The allowed QoS may be determined based on subscription and business agreement.

At step 1224, the network (e.g., 5GS) may send PIN Create Request to the PEMC 1206, using the WTRU Configuration Update message. The WTRU Configuration Update message may include, but are not limited to: PIN ID, PIN size, allowed QoS requirements, and a list of elements. PIN ID: Integer or String; Identifies the PIN to be created. The PIN size may be an integer indicating the maximum number of PEs allowed. The allowed QoS requirements may be allowed or desired QoS for the overall PIN. It can be an aggregate of individual PE's allowed QOS. The list of elements or the list of PE element may be a list of 1...N elements. Specifically, the list_of_Pin_elements [ ] may include, but is not limited to: (1) PIN Type : if it is an AR/VR, Temperature sensor; (2) Allowed QoS, Optional : Allowed QoS for the PIN type; (3) Max # of allowed PIN Type: Integer, indicates maximum number of the PE type allowed; (4) List of {PE_IDs, Timer value} (1....n), Timer value for each PE_ID indicates the validity time of the identified PIN Element; and/or (5) the network (e.g., 5GS) may include other available PEMC 1206 and PEGC 1204 in the list List_of_Pin_elements [ ].

At steps 1226A, B, the PEGC 1204 may be configured as below:

In the first scenario (i.e., Option 1 1226A), the 1206 PEMC can send configuration information to the PEGC 1204 by sending a configuration update message. This message may include but are not limited to: (1) PIN ID : Integer or String; Identifies the PIN to be created; (2) Aggregate QOS : Expected QOS requirement for the PE GW towards 5GS; (3) List_of_Pin_elements [ ] : List of 1...N PIN elements. The List of 1...N PIN elements may include, but is not limited to, (1) PIN Type : if it is an AR/VR, Temperature sensor; (2) Allowed QoS, Optional : Allowed QoS for the PIN type; and/or (3) List of {PE_IDs, Timer value} (1....n), Timer value for each PE_ID indicates the validity time of the identified PE.

In the second scenario (i.e., Option 2 1226B), the network (e.g., 5GS) can configure the PEGC 1204 by sending a configuration update message. This message may include, but are not limited to: (1) PIN ID : Integer or String; Identifies the PIN to be created; (2) Aggregated QOS : Expected QOS requirement for the PE GW towards 5GS; and/or (3) List_of_Pin_elements [ ]. The List of 1...N PIN elements may include: (1) PIN Type : if it is an AR/VR, Temperature sensor; (2) Allowed QoS, Optional : Allowed QoS for the PIN type; and (3) List of {PE_IDs, Timer value} (1....n), Timer value for each PE_ID indicates the validity time of the identified PE.

At step 1228, the PEMC 1206 may triggers PEs 1202 to join the PIN. At step 1230, PEs 1202 may connect to the PEGC 1204 and the connectivity may be set up by the PEGC 1204 among PEs 1202 and/or PE 1202 to the network (e.g., 5GS).

Assuming that the PIN is setup successfully as step 1230, the PEMC 1206 may inform the network (e.g., 5GS) by sending a WTRU configuration update response at step 1232. The configuration update response may include, but are not limited to: (1) PIN ID : Integer or String; Identifies the PIN created; (2) List of PIN Elements [PE_ID....] : PIN Elements part of the created PIN; and/or (3) Result : Success or Failure. At step 1234, the network (e.g., 5GS) may send a create PIN response to the service provider. The create PIN response may include, but are not limited to: (1) PIN ID : Integer or String; Identifies the PIN created; (2) List of PIN Elements [Application Level PIN ID, ....] : PIN Elements part of the created PIN; and/or (3) Result : Success or Failure.

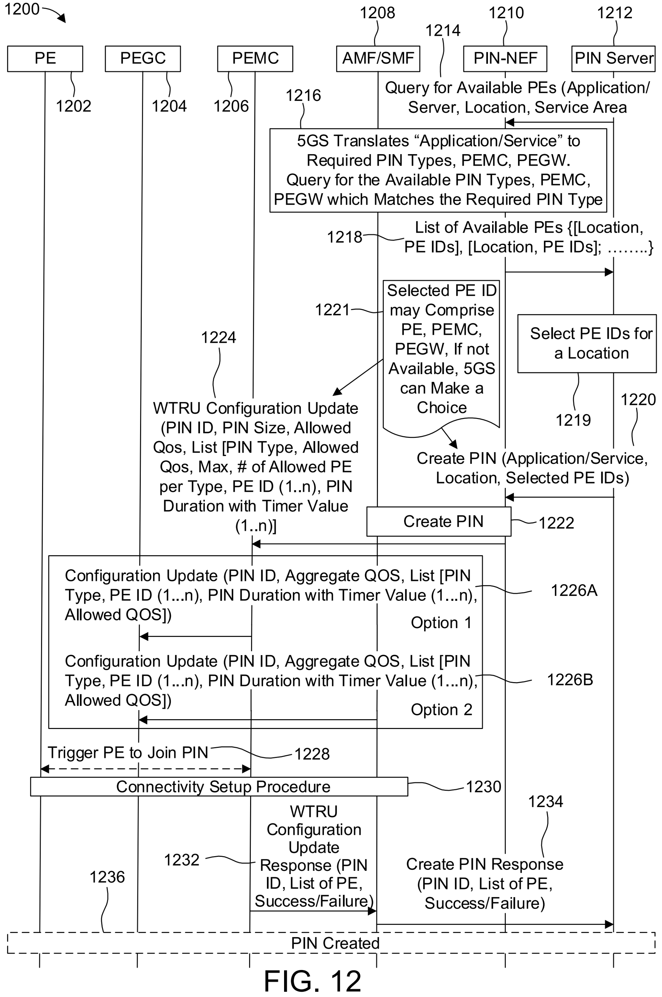

Embodiments for NW-initiated PIN update are described herein. FIG. 12 is a diagram illustrating an example network-initiated PIN update, which may be used in combination with any of other embodiments described herein. In this embodiment, the scenario describes the update of PIN that is managed by a service provider.

At step 1314, PEs 1302 may become available or unavailable. The PEMC 1306 may become aware of it. A new PE 1302 may connect to the PEMC 1306 to inform about its availability. The existing PE may be out of service and detected by the PEMC 1306. The existing PE may provide additional service and QoS requirements may change (e.g., Aggregate QoS from the PEGC 1304 to the network (e.g., 5GS)). For example, the existing PE may support multiple, different PINs or services. Once the existing PE leaves one of the multiple PINs, the event may trigger the existing PE to provide a different service associated with the different PE that the existing PE is still associated with. It is noted that the network may refer to as any 3GPP network such as a 5G system (5GS) comprising a CN and a RAN. The network may include AMF/SMF 1308, and PIN-NEF 1310.

At step 1316, the PEMC 1306 may inform the network (e.g., 5GS) about the change by sending a mobility registration request. The mobility registration request may include, but are not limited to: (1) PIN ID : Integer or String; Identifies the PIN; (2) Change Indication : Enum (newPE, peUnav, qosChange); (3) PE-ID : String, Identifies the PIN available or unavailable; (4) qosReq : String, describes the new aggregate QOS requirement; (5) S-NSSAI : identifies the slice, which includes the PIN; and (6) DNN : for the PIN, which is updated.

At step 1318, the network (e.g., 5GS) may inform a PIN service provider (e.g., PIN server 1312) about the availability of PEs or change in QoS of the PIN. The network (e.g., 5GS) may first authorize the change with the service provider (e.g., PIN server 1312). At step 1320, the network (e.g., 5GS) may inform the PEMC 1306 that the changes are authorized by sending the mobility registration response. The mobility registration response may include, but are not limited to: Allowed / Barred indication that may add a new PE or update QoS.

At step 1322, the service provider (e.g., PIN server 1312) may decide to update the PIN, which may be one or more of the following actions: (1) Delete a PE ID from the PIN, identified by PIN ID; (2) Add a PE-ID to the current PIN identified by PIN ID; and (3) Update the QOS of the PIN. The service provider (e.g., PIN server 1312) may send an update PIN message to the network (e.g., 5GS). The update PIN message may include, but are not limited to: (1) PIN ID: Integer or String; Identifies the PIN; (2) New Application-Level PE Ids: List of PE ID (1...n); this list includes the PE for the PIN, considering added or deleted PEs; and (3) Approved QOS : YES or NO. At step 1324, the network (e.g., 5GS) may identify the corresponding PEMC 1306 based on PIN ID.

At step 1326, the network (e.g., 5GS) may send a WTRU configuration Update message to the PEMC 1306. The WTRU configuration update message may include, but are not limited to: (1) PIN ID; and (2) List Update_action { 1 ... n }. The List Update_action { 1 ... n } may include, but is not limited to: (1) Action : Enum ADD, DELETE, UPDATE_QOS; (2) PIN TYPE : identifies if it is an AR/VR, Temperature sensor; (3) {List of PE-ID (1...n) : PE identifiers; PIN_Duration(1...n): Timer value}; and (4) Updated QOS : New QoS from the PEGC 1304 to the network (e.g., 5GS).

At steps 1328A, B, the PEGC 1304 may be configured as following:

In the first scenario (i.e., Option 1 1328A), the PEMC 1306 can send configuration information to the PEGC 1304 by sending a configuration update message. The configuration update message may include, but are not limited to: (1) PIN ID : Integer or String; Identifies the PIN to be updated; and (2) List of Update_Action {1...n}. The List of Update_Action {1...n} may include, but is not limited to: (1) Action : Enum ADD, DELETE, UPDATE_QOS; (2) List_of_Pin_elements [ ] : List of 1...N PIN elements; and (3) Aggregate QoS : Updated QoS requirement for the PEGC 1304 towards the network (e.g., 5GS). The List of 1...N PIN elements may include, but is not limited to: (1) PIN Type : if it is an ARNR, Temperature sensor; (2) Allowed QoS, Optional : Allowed QoS for the PIN type; and (3) List of {PE_IDs, Timer value} (1....n), Timer value for each PE_ID indicates the validity time of the identified PIN Element.

In the second scenario (i.e., Option 2 1328B), the network (e.g., 5GS) can configure the PEGC 1304 by sending a configuration update message. This configuration update message may include, but are not limited to: (1) PIN ID : Integer or String; Identifies the PIN to be updated; and (2) List of Update_Action {1...n}. The List of Update_Action {1...n} may include, but is not limited to: (1) Action : Enum ADD, DELETE, UPDATE_QOS; (2) List_of_Pin_elements [ ] : List of 1...N PIN elements; and (3) Aggregate QoS : Updated QoS requirement for the PEGC 1304 towards the network (e.g., 5GS). The List of 1...N PIN elements may include, but is not limited to: (1) PIN Type : if it is an ARNR, Temperature sensor; (2) Allowed QoS, Optional : Allowed QoS for the PIN type; and (3) List of {PE_IDs, Timer value} (1....n), Timer value for each PE_ID indicates the validity time of the identified PIN Element.

At step 1330, if the new PE 1302 is available, the PEMC 1306 may trigger PEs 1302 to join the PIN. At step 1332, the new PEs 1302 may connect to the PEGC 1304 or PE that is unavailable. The PEGC 1304 may update connectivity configuration, for example, among PEs 1302 or PE 1302 to the network (e.g., 5GS).

At step 1334, assuming that the PIN is setup successfully, the PEMC 1306 may inform the network (e.g., 5GS) by sending a WTRU configuration update response. The WTRU configuration update response may include, but are not limited to: (1) PIN ID : Integer or String; Identifies the PIN created; (2) List of PIN Elements [PE_ID....] : PIN Elements part of the created PIN; and (3) Result : Success or Failure.

At step 1336, the network (e.g., 5GS) may send an update_PIN_response to the service provider (e.g., PIN server 1312). The update_PIN_response may include, but are not limited to: (1) PIN ID : Integer or String; Identifies the PIN created; (2) List of PIN Elements [Application Level PIN ID, ....] : PIN Elements part of the created PIN; and (3) Result : Success or Failure. At step 1338, the PIN is updated by the network.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

### Itemized list of embodiments

1. A method for use in a first wireless transmit/receive unit (WTRU), the method comprising:
   transmitting, to a network node in a cellular network, a first non-access stratum (NAS) request message indicating capability of the first WTRU that acts as a Personal Internet of Things Network (PIN) Element (PE) with Management Capability (PEMC) in a PIN;
   receiving, from the network node in the cellular network, a first NAS response message that includes authorization information of the first WTRU that acts as the PEMC to initiate the PIN, an authorized PIN type and validity duration of the PIN;
   receiving, from a second WTRU, a connection request message that includes PE information associated with the second WTRU, wherein the PE information associated with the second WTRU includes a PE type of the second WTRU and a PE capability of the second WTRU; and
   transmitting, to the second WTRU, based on that the PE type and the PE capability are compatible with the authorized PIN type, a connection response message indicating that the second WTRU is authorized to act as a PIN element (PE) of the PIN.
2. The method of item 1, further comprising:
   transmitting, to the network node in the cellular network, based on that the PE type and the PE capability are incompatible with the authorized PIN type, a second NAS request message requesting a core network (CN) or a PIN server for authorization of the second WTRU to act as the PE of the PIN, wherein the second NAS request message includes the PE information associated with the second WTRU; and
   receiving, from the network node in the cellular network, a second NAS response message indicating that that the second WTRU is authorized to act as the PE of the PIN by the CN or the PIN server, wherein the second NAS response message includes an authorized PIN type, a PIN ID, one or more CN connectivity parameters, and validity duration of the PIN.
3. The method of item 2, further comprising:
   transmitting, to the second WTRU, another connection response message indicating that the second WTRU is authorized to act as the PE of the PIN.
4. The method of item 2, wherein the one or more CN connectivity parameters include one or more allowed Quality of Service (QoS) requirements associated with the PE type of the second WTRU.
5. The method of item 4, further comprising:
   receiving, from a third WTRU, another connection request message that includes PE information associated with the third WTRU, wherein the PE information associated with the third WTRU includes a PE type of the third WTRU and a PE capability of the third WTRU; and
   transmitting, to the network node in the cellular network, based on that one or more QoS requirements associated with the PE type of the third WTRU are different than the one or more allowed QoS requirements associated with the PE type of the second WTRU, a third NAS request message requesting the CN or the PIN server for authorization of the third WTRU to act as a PE of the PIN, wherein the third NAS request message includes the PE information associated with the third WTRU.
6. The method of item 1, wherein the authorized PIN type comprises home security, industrial security, home automation, industrial automation, healthcare monitoring, temperature sensing, motion detection, augmented reality (AR), virtual reality (VR), a connected vehicle, and an autonomous vehicle.
7. The method of item 1, wherein the PE type comprises a sensor, a light, a plug, a printer, a cellular phone, a wearable device, an augment reality (AR) device, a vehicle-mounted device, and a virtual reality (VR) device.
8. The method of item 1, wherein the first WTRU is capable of both a 3rd generation partnership project (3GPP) RAT and a non-3GPP RAT, and the second WTRU is capable of the non-3GPP RAT.
9. The method of claim 8, wherein the 3GPP RAT includes Global System for Mobile (GSM), Universal Mobile Telecommunications System (UMTS), Long Term Evolution (LTE), and 5G New Radio (NR), and the non-3GPP RAT includes Bluetooth, Wi-Fi, Bluetooth Low-Energy (BLE), Zigbee, and Z-Wave.
10. The method of item 8, wherein the PE capability of the second WTRU indicates that the second WTRU supports the non-3GPP RAT.
11. The method of item 1, further comprising:
   transmitting, to the network node in the cellular network, based on that the validity duration of the PIN expires, a third NAS request message requesting a core network (CN) or a PIN server for reauthorization of the second WTRU to act as the PE of the PIN, wherein the third NAS request message includes the PE information associated with the second WTRU.
12. A first wireless transmit/receive unit (WTRU) comprising:
   a transmitter configured to transmit, to a network node in a cellular network, a first non-access stratum (NAS) request message indicating capability of the first WTRU that acts as a Personal Internet of Things Network (PIN) Element (PE) with Management Capability (PEMC) in a PIN;
   a receiver configured to:
      receive, from the network node in the cellular network, a first NAS response message that includes authorization information of the first WTRU that acts as the PEMC to initiate the PIN, an authorized PIN type and validity duration of the PIN; and
      receive, from a second WTRU, a connection request message that includes PE information associated with the second WTRU, wherein the PE information associated with the second WTRU includes a PE type of the second WTRU and a PE capability of the second WTRU; and
   the transmitter configured to transmit, to the second WTRU, based on that the PE type and the PE capability are compatible with the authorized PIN type, a connection response message indicating that the second WTRU is authorized to act as a PIN element (PE) of the PIN.
13. The first WTRU of item 12, wherein the transmitter is further configured to:
   transmit, to the network node in the cellular network, based on that the PE type and the PE capability are incompatible with the authorized PIN type, a second NAS request message requesting a core network (CN) or a PIN server for authorization of the second WTRU to act as the PE of the PIN, wherein the second NAS request message includes the PE information associated with the second WTRU; and
   the receiver is further configured to:
      receive, from the network node in the cellular network, a second NAS response message indicating that that the second WTRU is authorized to act as the PE of the PIN by the CN or the PIN server, wherein the second NAS response message includes an authorized PIN type, a PIN ID, one or more CN connectivity parameters, and validity duration of the PIN; and
   the transmitter is further configured to:
      transmit, to the second WTRU, another connection response message indicating that the second WTRU is authorized to act as the PE of the PIN.
14. The first WTRU of item 13, wherein the one or more CN connectivity parameters include one or more allowed Quality of Service (QoS) requirements associated with the PE type of the second WTRU.
15. The first WTRU of item 14, wherein the receiver is further configured to receive, from a third WTRU, another connection request message that includes PE information associated with the third WTRU, wherein the PE information associated with the third WTRU includes a PE type of the third WTRU and a PE capability of the third WTRU, and the transmitter is further configured to transmit, to the network node in the cellular network, based on that one or more QoS requirements associated with the PE type of the third WTRU are different than the one or more allowed QoS requirements associated with the PE type of the second WTRU, a third NAS request message requesting the CN or the PIN server for authorization of the third WTRU to act as a PE of the PIN, wherein the third NAS request message includes the PE information associated with the third WTRU.
16. The first WTRU of item 12, wherein the authorized PIN type comprises home security, industrial security, home automation, industrial automation, healthcare monitoring, temperature sensing, motion detection, augmented reality (AR), virtual reality (VR), a connected vehicle, and an autonomous vehicle.
17. The first WTRU of item 12, wherein the PE type comprises a sensor, a light, a plug, a printer, a cellular phone, a wearable device, an augment reality (AR) device, a vehicle-mounted device, and a virtual reality (VR) device.
18. The first WTRU of item 12, wherein the first WTRU is capable of both a 3rd generation partnership project (3GPP) RAT and a non-3GPP RAT, and the second WTRU is capable of the non-3GPP RAT, and wherein the 3GPP RAT includes Global System for Mobile (GSM), Universal Mobile Telecommunications System (UMTS), Long Term Evolution (LTE), and 5G New Radio (NR), and the non-3GPP RAT includes Bluetooth, Wi-Fi, Bluetooth Low-Energy (BLE), Zigbee, and Z-Wave.
19. The first WTRU of item 18, wherein the PE capability of the second WTRU indicates that the second WTRU supports the non-3GPP RAT.
20. The first WTRU of item 12, wherein the transmitter is further configured to transmit, to the network node in the cellular network, based on that the validity duration of the PIN expires, a third NAS request message requesting a core network (CN) or a PIN server for reauthorization of the second WTRU to act as the PE of the PIN, wherein the third NAS request message includes the PE information associated with the second WTRU.

## Claims

1. A method for use in a first wireless transmit/receive unit, WTRU, the method comprising:
receiving, by the first WTRU authorized to act as a personal internet of things network, PIN, element, PE, with management capability, PEMC, in a PIN associated with a PIN identification, from a second WTRU, a connection request message comprising PE information associated with a second WTRU; and
transmitting, to the second WTRU, based on the PIN identification and the PE information, a connection response message indicating that the second WTRU is authorized to act as a PIN element, PE, of the PIN.

2. The method of claim 1, wherein the PE information comprises a device identification and a PE identification.

3. The method of claim 2, wherein a device type of the second WTRU comprises one or more of a sensor, a light, a plug, a printer, a cellular phone, a wearable device, an augment reality, AR, device, a vehicle-mounted device, or a virtual reality, VR, device.

4. The method of claim 1, further comprising:
transmitting, to a network node, a registration request message comprising PEMC information, wherein the PEMC information includes capability of the first WTRU that acts as a PEMC in the PIN and a service provided by the first WTRU in the PIN; and
receiving, from the network node, a registration response message indicating that the first WTRU is authorized to act as the PEMC of the PIN to provide the service.

5. The method of claim 4, wherein the registration response message further comprises the PIN identification of the PIN.

6. The method of claim 1, further comprising:
based on receiving the connection request message comprising the PE information, transmitting, to a network node, another connection request message comprising the PE information; and
receiving, from the network node, another connection response message indicating that the second WTRU is authorized to act as the PE of the PIN.

7. The method of claim 6, wherein the another connection response message is determined based on the PE information of the second WTRU associated with the PIN identification of the PIN.

8. The method of claim 1, wherein the first WTRU is capable of both a 3rd generation partnership project, 3GPP, radio access technology, RAT, and a non-3GPP RAT, and the second WTRU is capable of the non-3GPP RAT.

9. The method of claim 8, wherein the 3GPP RAT includes one or more of Global System for Mobile, GSM, Universal Mobile Telecommunications System, UMTS, Long Term Evolution, LTE, or 5G New Radio, NR, and the non-3GPP RAT includes one or more of Bluetooth, Wi-Fi, Bluetooth Low-Energy, BLE, Zigbee, or Z-Wave.

10. The method of claim 8, wherein PE capability of the second WTRU indicates that the second WTRU supports the non-3GPP RAT.

11. A first wireless transmit/receive unit, WTRU, comprising:
a receiver configured to receive, by the first WTRU authorized to act as a personal internet of things network, PIN, element, PE, with management capability, PEMC, in a PIN associated with a PIN identification, from a second WTRU, a connection request message comprising PE information associated with a second WTRU; and
a transmitter configured to transmit, to the second WTRU, based on the PIN identification and the PE information, a connection response message indicating that the second WTRU is authorized to act as a PIN element, PE, of the PIN.

12. The first WTRU of claim 11, wherein the PE information comprises a device identification and a PE identification.

13. The first WTRU of claim 12, wherein a device type of the second WTRU comprises one or more of a sensor, a light, a plug, a printer, a cellular phone, a wearable device, an augment reality, AR, device, a vehicle-mounted device, or a virtual reality, VR, device.

14. The first WTRU of claim 11, wherein:
the transmitter is further configured to transmit, to a network node, a registration request message comprising PEMC information, wherein the PEMC information includes capability of the first WTRU that acts as a PEMC in the PIN and a service provided by the first WTRU in the PIN; and
the receiver is further configured to receive, from the network node, a registration response message indicating that the first WTRU is authorized to act as the PEMC of the PIN to provide the service.

15. The first WTRU of claim 11, wherein the transmitter is further configured to transmit, based on receiving the connection request message comprising the PE information, to a network node, another connection request message comprising the PE information, and the receiver is further configured to receive, from the network node, another connection response message indicating that the second WTRU is authorized to act as the PE of the PIN.
